# EUROPEAN PATENT APPLICATION

(11) **EP 4 807 165 A1**
(43) Date of publication of application: **16.09.2026**
(21) Application number: 26163761.5
(22) Date of filing: 10.03.2026
(51) Int. Cl.: F02C 7/22, F02C 7/228, F02C 7/232, F02C 7/26, F02C 9/28

(54) **RATIO UNIT BASED SYSTEM FOR FILLING A FUEL MANIFOLD OF A GAS TURBINE ENGINE**

(30) Priority: 10.03.2025 US 202519075452
(71) Applicant: Pratt & Whitney Canada Corp., Longueuil, Québec J4G 1A1 (CA)
(72) Inventor: DURANLEAU-HENDRICKX, Louis, (01BE5) Longueuil, J4G 1A1 (CA)
(74) Representative: Dehns

(57) **Abstract**

A method includes flowing a fuel to a primary fuel manifold (128A) of a gas turbine engine (100), flowing the fuel to a secondary fuel manifold (128B) of the gas turbine engine (100) at a fuel flow rate, monitoring a compressor discharge pressure of the gas turbine engine (100), determining a ratio of the fuel flow rate of the secondary fuel manifold (128B) and the compressor discharge pressure, and adjusting the fuel flow rate of the fuel to the secondary fuel manifold (128B) based on the ratio.

## Description

### TECHNICAL FIELD

This disclosure relates generally to gas turbine engines and processes. More specifically, this disclosure relates to a ratio unit based system for filling a fuel manifold of a gas turbine engine.

### BACKGROUND

Starting a gas turbine engine, either on the ground or in-flight, requires filling of a primary gas manifold and nozzle before fuel reaches the combustor and starts to combust. Similarly, a secondary gas manifold and nozzle maybe filled after the primary gas manifold for additional power or thrust. If fuel is injected into either manifold too quickly, however, an over fuel spike into the combustor may cause the engine compressor to surge, damaging the engine and reducing available thrust. Accordingly, there is a need for improved systems and methods for filling a fuel manifold of a gas turbine engine.

### SUMMARY

This disclosure provides a ratio unit based system for filling a fuel manifold of a gas turbine engine.

In an aspect of the present invention, a method is provided. The method includes flowing a fuel to a primary fuel manifold of a gas turbine engine, flowing the fuel to a secondary fuel manifold of the gas turbine engine at a fuel flow rate, monitoring a compressor discharge pressure of the gas turbine engine, determining a ratio of the fuel flow rate of the secondary fuel manifold and the compressor discharge pressure, and adjusting the fuel flow rate of the fuel to the secondary fuel manifold based on the ratio.

Any single one or any combination of the following features may be used with the above embodiment. Adjusting the fuel flow rate of the fuel to the secondary fuel manifold based on the ratio includes adjusting the fuel flow rate based on a ratio unit schedule. The ratio unit schedule includes a rising rate, a filling sequence plateau, and a falling rate. The rising rate of the ratio unit schedule begins at engine start. The rising rate of the ratio unit schedule begins at a low power engine state. Flowing fuel to a secondary fuel manifold of the gas turbine engine at a fuel flow rate includes flowing the fuel to a tertiary fuel manifold of the gas turbine engine at a second fuel flow rate based on a ratio of the second fuel flow rate of the tertiary fuel manifold and the compressor discharge pressure. The ratio is synthesized from an on-board model.

In another aspect of the present invention, a system is provided. The system includes a primary fuel manifold, a secondary fuel manifold, and a controller including at least one processor. The processor is configured to cause the system to flow a fuel to a primary fuel manifold, flow the fuel to a secondary fuel manifold at a fuel flow rate, monitor a compressor discharge pressure, determine a ratio of the fuel flow rate of the secondary fuel manifold and the compressor discharge pressure, and adjust the fuel flow rate of the fuel to the secondary fuel manifold based on the ratio.

Any single one or any combination of the following features may be used with the above embodiment. Adjusting the fuel flow rate of the fuel to the secondary fuel manifold based on the ratio, the processor is configured to adjust the flow rate based on a ratio unit schedule. The ratio unit schedule includes a rising rate, a filling sequence plateau, and a falling rate. The rising rate of the ratio unit schedule begins at engine start. The rising rate of the ratio unit schedule begins at a low power engine state. The system may include a tertiary manifold configured to receive fuel based on a ratio of a second fuel flow rate of the tertiary manifold and the compressor discharge pressure. The ratio is synthesized using the processor using an on-board model.

In another aspect of the present invention, an electronic device configured to fill a fuel manifold of a gas turbine engine is provided. The electronic device includes at least one sensor configured to capture a compressor discharge pressure of the gas turbine engine, and at least one processor coupled to the at least one sensor. The at least one processor is configured to flow a fuel to a primary fuel manifold of the gas turbine engine, flow the fuel to a secondary fuel manifold of the gas turbine engine at a fuel flow rate, monitor the compressor discharge pressure, determine a ratio of the fuel flow rate of the secondary fuel manifold and the compressor discharge pressure, and adjust the fuel flow rate of the fuel to the secondary fuel manifold based on the ratio.

Any single one or any combination of the following features may be used with the above embodiment. While adjusting the fuel flow rate of the fuel to the secondary fuel manifold based on the ratio, the at least one processor is configured to adjust the flow rate based on a ratio unit schedule. The ratio unit schedule includes a rising rate, a filling sequence plateau, and a falling rate. The rising rate of the ratio unit schedule begins at engine start. The rising rate of the ratio unit schedule begins at a low power engine state. The ratio is synthesized using the processor using an on-board model.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1A illustrates a cross-sectional side view of an example gas turbine engine in accordance with this disclosure;
FIGURE 1B illustrates an example fuel system of the gas turbine engine of FIGURE 1A in accordance with this disclosure;
FIGURE 1C illustrates a cross-sectional rear view of the example gas turbine engine of FIGURE 1A in accordance with this disclosure;
FIGURE 2A illustrates an example ratio unit schedule for fuel supply of a manifold of a gas turbine engine in accordance with this disclosure;
FIGURE 2B illustrates an example ratio unit schedule for fuel supply of a manifold of a gas turbine engine in accordance with this disclosure;
FIGURE 3 illustrates an example method for ratio unit based filling of a fuel manifold of a gas turbine engine according to this disclosure;
FIGURE 4 illustrates example fuel flow and pressure profiles to achieve a ratio unit schedule in accordance with this disclosure; and
FIGURE 5 illustrates an example device for ratio unit based filling of a fuel manifold of a gas turbine engine in accordance with this disclosure.

### DETAILED DESCRIPTION

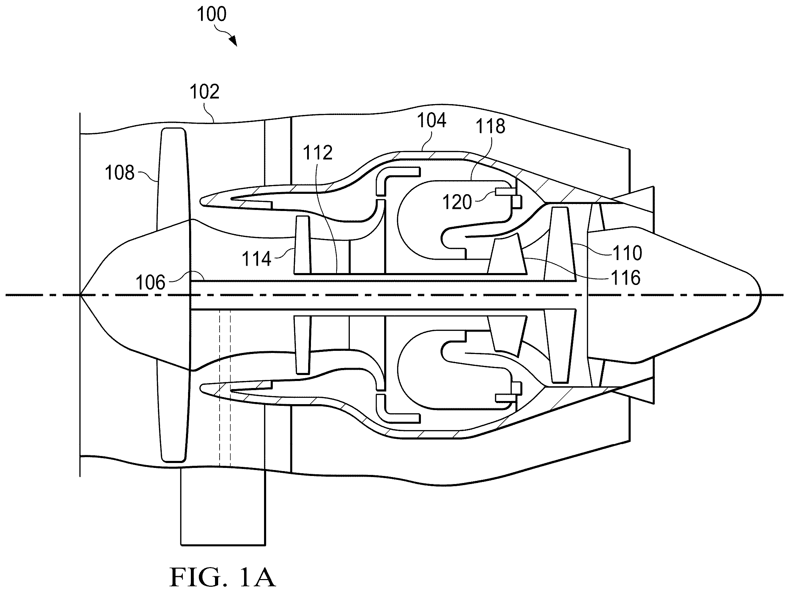

FIGURES 1A through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As introduced above, manifold filling sequences are used extensively on gas turbines during engine starts with the objective to quickly fill the previously drained fuel in the secondary manifold so that when the fuel flow divider will later open fuel flow to the secondary manifold there will be no delay in engine response since the manifold is already full. The conventional manifold filling sequence is a fixed high-amplitude fuel spike/pulse of really short duration and does not accommodate potential engine surges or stalls that may occur during operation of the engine.

The present disclosure provides for systems and methods for filling a fuel manifold of a gas turbine engine. In particular, the present disclosure provides for a software-controlled secondary fuel manifold filling sequence which is scheduled using a Ratio Unit profile instead of a conventional fuel flow profile. A gas turbine ratio unit is a parameter derived from the legacy hydromechanical gas turbine controls and defined as a ratio of engine fuel flow and compressor discharge pressure (highest pressure in the engine). Scheduling a filling sequence with Ratio Units as described in the present disclosure may be used for engine start but is especially useful for special engine operations where the engine is decelerating below the secondary manifold draining point (such as at low power) and stabilizes to this low power point for a certain amount of time before a reacceleration is requested.

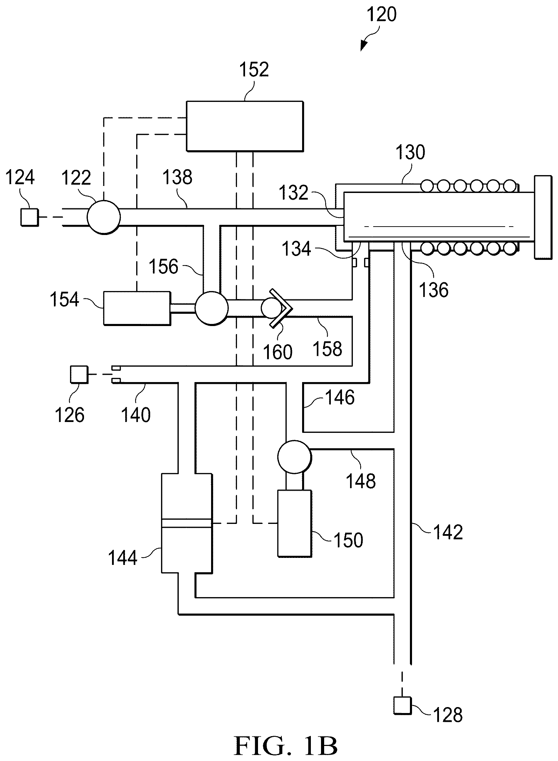

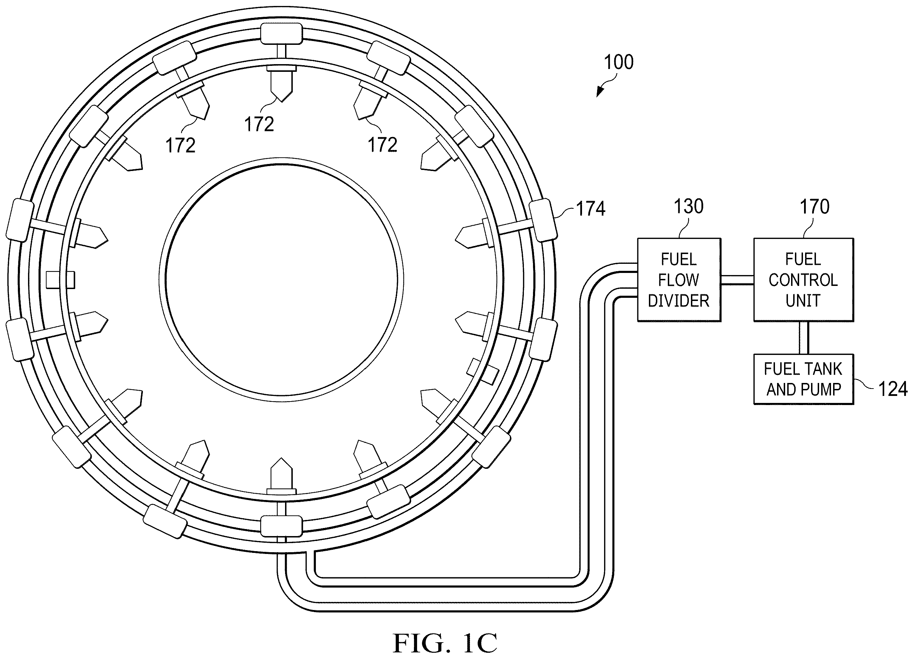

FIGURE 1A illustrates a cross-sectional side view of an example gas turbine engine 100 in accordance with this disclosure. FIGURE 1B illustrates an example fuel system of the gas turbine engine 100 of FIGURE 1A in accordance with this disclosure. FIGURE 1C illustrates a cross-sectional rear view of the example gas turbine engine 100 of FIGURE 1A in accordance with this disclosure.

As shown in FIGURE 1A, the engine 100 is a turbofan gas turbine engine incorporating an embodiment of the present invention is presented as an example of the application of the present invention, and includes a housing or nacelle 102, a core casing 104, a low pressure spool assembly seen generally at 106 which includes a fan assembly 108 and a low pressure turbine assembly 110, and a high pressure spool assembly seen generally at 112 which includes a compressor assembly 114 and a high pressure turbine assembly 116. The core casing 104 surrounds the low and high pressure spool assemblies 106 and 112 in order to define a main fluid path (not indicated) therethrough. In the main fluid path there are provided a combustor seen generally at 118 and a fuel system 120 for delivery of fuel to the combustor 118 for combustion. The compressor assembly 114 provides a compressed airflow (not indicated) through the main fluid path and in communication with the combustor 118 for combustion therein.

As shown in FIGURE 1B, the fuel system 120 according to one embodiment of the present invention, comprises a fuel pump 122 for pressurizing the fuel to establish a fuel pressure under which fuel is delivered from a fuel source 124 through a fluidic connection of the fuel system 120 preferably to at least one pilot nozzle such as a torch nozzle 126 or some other form of primary nozzle, which is used to initialize ignition of combustion in the combustor 118, and a one or more fuel manifolds 128 of the combustor 118 which distributes fuel to fuel nozzles of the combustor 118 in order to supply fuel for combustion within the combustor 118. The one or more fuel manifolds 128 is in fluid communication with the combustion chamber which in turn is in a fluidic communication with a stage of the compressor 114. The fluidic connection of the fuel system 120 further includes, for example, a minimum pressure/flow divider valve 130 having an inlet 132 and outlets 134, 136, which are normally closed under a spring force of the minimum pressure/flow divider valve 130. The minimum pressure/flow divider valve 130 is adapted to open the outlet 134 only when inlet 132 is exposed to a low pressure which is equal to or above a predetermined minimum pressure threshold, but is lower than a predetermined high pressure threshold, or to open both outlets 134 and 136 when inlet 132 is exposed to a high pressure, which is equal to or above the predetermined high pressure threshold. This will be further discussed with reference to the system operation process.

A fuel flow passage 138 interconnects the fuel pump 122 and the inlet 132 of the minimum pressure/flow divider valve 130, and a fuel flow passage 140 is connected between the outlet 134 and the pilot torch nozzle 126. There is a fuel flow passage 142 extending between the outlet 136 of the minimum pressure/flow divider valve 130 and the one or more fuel manifolds 128 in a parallel relationship with the fuel flow passage 140. It should be noted that due to the flow rate difference between the required fuel flow to the pilot torch nozzle 126 (the torch flow) and the fuel flow to the one or more fuel manifolds 128 (the manifold flow), the fuel flow passage 140 is sized in cross-section smaller than the fuel flow passage 142, thereby resulting in a high flow resistance of the fuel flow passage 140 relative to the fuel flow passage 142.

A differential pressure sensor 144 is preferably connected between the fuel flow passage 140 and the fuel flow passage 142 such that a pressure differential between fuel flow passages 140 and 142 can be monitored from time to time and particularly during engine start up while no fuel flow is delivered to the one or more fuel manifolds 128. The differential pressure sensor 144 is electrically connected to a controller 152 such that the pressure differential between the fuel flow passages 140 and 142 monitored by the differential pressure sensor 144, can be used by controller 152 as a reference signal for controlling the operation process of the fuel system 120. For example, the controller 152 may be an electrical engine control (EEC) or a full authority digital engine control (FADEC).

In practice, metering the start fuel flow using only the fuel pump characteristics is not very practical. However, when the pressure differential between the pilot nozzle fuel supply and the main manifold (which is in communication with the combustor chamber pressure) is measured, the fuel flow to the pilot nozzle can be calculated and thus controlled by adjusting the speed of the fuel pump via the controller 152.

A flow equalization solenoid valve 150 is preferably connected by fuel flow passages 146, 148 to the respective fuel flow passages 140 and 142, in a parallel relationship with the differential pressure sensor 144. The flow equalization solenoid valve 150 is a normally open valve to allow a fluidic communication between the fuel flow passages 140 and 142 when the minimum pressure/flow divider valve 130 closes outlets 134 and 136 thereof. The flow equalization solenoid valve 150 is electrically connected to and controlled by controller 152 and is adapted to close the fuel flow passages 146, 148 when a control signal is received from the controller 152.

The differential pressure sensor 144 is in fluidic connection with the respective pilot torch nozzle 126 and the one or more fuel manifolds 128 which are in turn in fluid communication with the combustion chamber, which is supplied with air pressure from the compressor, for example, P3 compressor air. Therefore, the P3 compressor air pressure is automatically provided to the differential pressure sensor 144 as a reference pressure via fuel flow passage 142, when the flow equalization solenoid valve 150 is in the closed position and outlet 136 of the minimum pressure/flow divider valve 130 is closed (when the compressor 114 is rotated either by the turbine 116 or by a starter) for monitoring the pressure differential between the fuel flow passages 140 and 142. For example, the pressure differential between the fuel flow passages 140 and 142 monitored by the differential pressure sensor 144, can be used for monitoring a fuel flow through the fuel flow passage 140 to the pilot torch nozzle 126 during the engine start-up process, and to determine when to deactivate the flow equalization solenoid valve 150 to open the fuel flow passages 146, 148 in order to allow the fuel flow to pass through the fuel flow passage 142 to the one or more fuel manifolds 128. This will be further described hereinafter.

An ecology solenoid valve 154 is preferably provided to control fuel flow passages 156, 158 which are connected to the respective fuel flow passages 138 and 140 to form a bypass over the minimum pressure/flow divider valve 130. The ecology solenoid valve 154 is normally closed and is electrically connected to controller 152. The ecology solenoid valve 154 can be controlled by controller 152 to selectively open for establishing the fluidic connection of the fuel system 120 between the fuel source 124 and the one or more fuel manifolds 128 as well as the pilot torch nozzle 126 when required.

A check valve 160 is preferably provided within the fuel flow passage 158. Should the ecology valve 154 be opened in malfunction, the check valve 160 ensures that the bypass connection over the minimum pressure/flow divider valve 130 should be used only for fuel flowing therethrough back to the fuel pump 122 and the fuel source 124, but not for fuel supply therethrough from the fuel pump 122.

As shown in FIGURE 1C, a FCU 170 (Fuel Control Unit) 170, which may be disposed in or part of the controller 152, meters fuel flow from the fuel source 124 in accordance with the control software commanded fuel flow. The FCU 170 sends fuel flow to the flow divider valve 130 that divides fuel flow between a primary fuel manifold 128A and a secondary fuel manifold 128B. At low fuel flow (or fuel pressure), the flow divider valve 130 only sends fuel to the primary fuel manifold 128A that supplies the primary fuel nozzles 172 (that consists of smaller passages in the nozzles to better atomize the fuel even at low pressure). This mode is used during engine starting on many engine models. Above a certain fuel flow (or fuel pressure), the flow divider valve 130 also starts to send fuel to the secondary fuel manifold 128B that supplies the secondary fuel nozzles 174 (with bigger passages to supply enough fuel flow at higher engine power). Therefore, above this fuel flow/pressure, both manifolds supply fuel to their respective nozzles (actual flow split between primary and secondary varies with engine design). The flow divider valve 130 can be a mechanical divider (consisting in valves and springs) or an electronic actuator (such as solenoid valve) controlled by the engine control software. When fuel flow (or pressure) is reduced below a certain value (such as during a shutdown or a deceleration to very low power), the secondary fuel manifold 128B starts to drain either by expelling the remaining fuel in the combustor or purging the remaining fuel back to the fuel source 124.

Although FIGURES 1A-1C illustrate a gas turbine engine 100 configured for ratio unit based filling of its primary and secondary fuel manifolds, various changes may be made to FIGURES 1A-1C. For example, the gas turbine engine 100 may include additional fuel manifolds, such as a tertiary manifold, that receive fuel from the fuel source 124 from the flow divider valve 130.

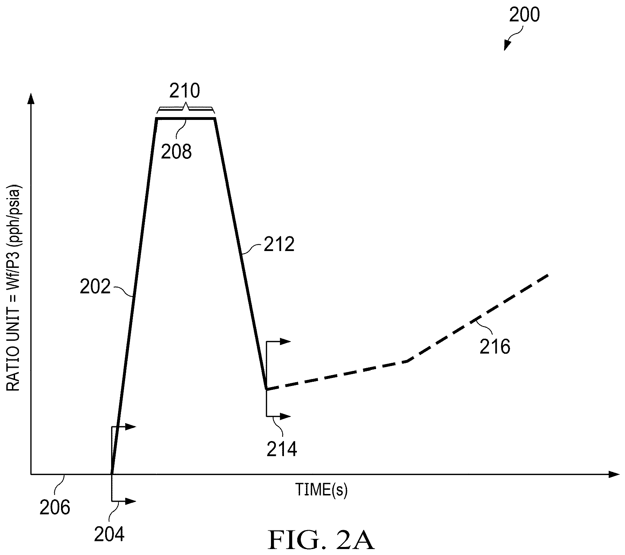

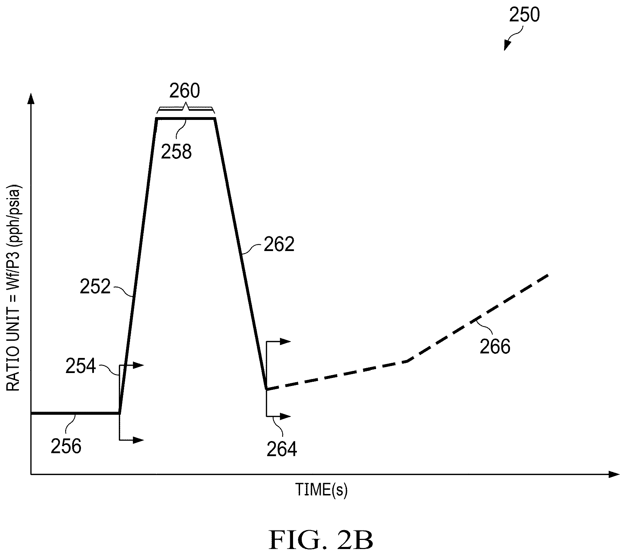

The gas turbine engine 100 is configured for ratio unit based filling of its primary and secondary fuel manifolds by having the controller 152 use one or more ratio unit schedules that dictate fuel flow into each respective manifold. In particular, as the primary fuel manifold 128A is maintained full, the ratio unit schedule is particularly useful for the secondary fuel manifold 128B, as well as additional manifolds in embodiments with a third fuel manifold, a fourth fuel manifold, or more, where each additional fuel manifold would have its own ratio unit schedules. The controller 152 may use one or more ratio unit schedules as shown in FIGURES 2A and 2B, for example.

FIGURE 2A illustrates an example ratio unit schedule 200 for fuel supply of a manifold of a gas turbine engine in accordance with this disclosure. FIGURE 2B illustrates an example ratio unit schedule 250 for fuel supply of a manifold of a gas turbine engine in accordance with this disclosure In particular, FIGURE 2A illustrates a ratio unit schedule 200 for fuel supply of a manifold of a gas turbine engine that may be used during engine start, and FIGURE 2B illustrates a ratio unit schedule 250 for fuel supply of a manifold of a gas turbine engine that may be used during acceleration from a stabilized low power state, such as below the secondary manifold flowing fuel flow.

As shown in FIGURE 2A, the ratio unit schedule 200 includes a rising rate 202 that begins at a schedule start 204. For example, the schedule start 204 may initiate from a engine shutdown state 206, such as during engine startup. The rising rate 202 is a rise in a ratio unit defined as a ratio of the fuel flow, e.g., in pounds per hour (pph), of a manifold, such as the secondary manifold 128B of FIGURE 1C, to the compressor discharge pressure (P3 pressure). The ratio unit rises in the rising rate 202 to desired ratio unit value where the ratio unit schedule 200 enters a filling sequence plateau 208 for a fill duration 210. During the filling sequence plateau 208, fuel is flowed into the secondary manifold 128B. At the end of the fill duration 210, the ratio unit schedule 200 enters a falling rate 212, where the ratio unit is decreased, resulting in less fuel flow into the secondary fuel manifold 128B. The rising rate 202 ends at a schedule end 214 corresponding to the end of the falling rate 212. Afterwards, the fuel system 120 may enter a nominal engine control 216.

The advantage of the proposed ratio unit filling sequence, versus a conventional fuel scheduling, is that the ratio unit intrinsically accommodates engine surges and stalls. engine surges or stalls are an aerodynamic instability phenomenon that occur when a compressor operates in a regimen that induces a flow separation in a compressor blade row. This flow separation prevents the engine from compressing air and creates a violent flow reversal when the high-pressure compressed air from the combustor or end of the compressor flows back towards engine inlet. Surges and stalls must be prevented as much as possible in gas turbine engines as these may damage the engine, reduce available power and thrust, and increase engine temperature.

Similar to the ratio unit schedule 200, the ratio unit schedule 250 of FIGURE 2B includes a rising rate 252 that begins at a schedule start 254. However, the schedule start 254 may correspond to an engine low power state 256. The engine low power state 256 may occur during flight, e.g., operation at flight idle, where the secondary fuel manifold 128B is empty. The ratio unit rises in the rising rate 252 to desired ratio unit value where the ratio unit schedule 250 enters a filling sequence plateau 258 for a fill duration 260. During the filling sequence plateau 258, fuel is flowed into the secondary manifold 128B. At the end of the fill duration 260, the ratio unit schedule 250 enters a falling rate 262, where the ratio unit is decreased, resulting in less fuel flow into the secondary fuel manifold 128B. The rising rate 252 ends at a schedule end 264 corresponding to the end of the falling rate 262. Afterwards, the fuel system 125 may return to a nominal engine control 266.

As shown in FIGURE 2B, using ratio unit based fueling is useful for reacceleration from a low power condition (where the secondary fuel manifold 128B was empty, and a filling sequence is required to fill it before reaccelerating). This is because there is more risk of engine surge in that condition since the secondary manifold 128B may not be fully empty depending on the exact power at which the engine was stabilized. A partially full secondary fuel manifold 128B will increase the surge risk during the filling sequence since some of the fuel will be sent to the combustor instead of only filling the manifold lines, increasing compressor back pressure and leading to potential surge or stall.

Although FIGURES 2A and 2B illustrate example ratio unit schedules 200, 250 for fuel supply of a manifold of a gas turbine engine, various changes may be made to FIGURES 2A and 2B. For example, various components in FIGURES 2A and 2B may be combined, further subdivided, replicated, omitted, or rearranged and additional components may be added according to particular needs.

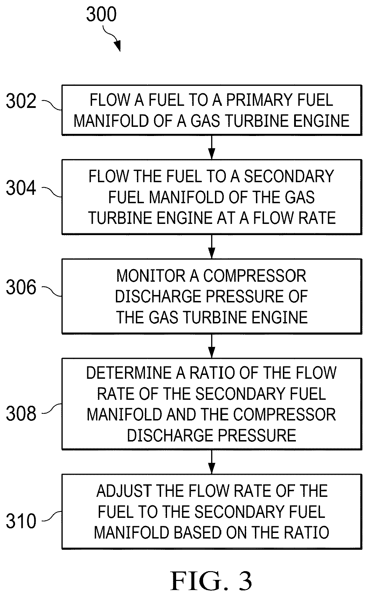

The gas turbine engine system 100, using the controller 152, may implement a method of ratio unit based filling of a fuel manifold of a gas turbine engine with one or more ratio unit schedules. For example, the controller 152, may implement a method as shown in FIGURE 3.

FIGURE 3 illustrates an example method 300 for ratio unit based filling of a fuel manifold of a gas turbine engine according to this disclosure. For ease of explanation, the method 300 of FIGURE 3 is described as being performed using the gas turbine engine system 100 of FIGURES 1A-1C. However, the method 300 may be used with any other suitable system and any other suitable gas turbine engine system.

As shown in FIGURE 3, the fuel system will flow a fuel to a primary fuel manifold at step 302. For example, the controller 152 may flow fuel from the fuel source 124 to the primary fuel manifold 128A using the flow divider valve 130.

Similarly, the fuel system will flow the fuel to a secondary fuel manifold at a fuel flow rate at step 304. For example, the controller 152 may flow fuel from the fuel source 124 to the secondary fuel manifold 128B using the flow divider valve 130 at a fuel flow rate.

Although described regarding a fuel system having only two fuel manifolds, other embodiments are contemplated. For example, if the fuel system includes a third, fourth, or more manifold, the fuel system will flow fuel to each additional manifold, such as by flowing the fuel to a tertiary fuel manifold of the gas turbine engine at a second fuel flow rate.

The fuel system will monitor a compressor discharge pressure, using one or more sensors, at step 306. For example, the controller 152 may receive pressure data from the one or more pressure sensors 144 related to the compressor discharge pressure.

The fuel system will determine a ratio of the fuel flow rate of the secondary fuel manifold and the compressor discharge pressure at step 308. For example, the controller 152 may calculate a ratio of the fuel flow rate into the secondary fuel manifold 128B to the compressor discharge pressure, e.g., a ratio unit. Alternatively, the controller 152 may synthesize the ratio unit using an on-board model along with the received pressure data from the one or more pressure sensors 144. For example, the on-board model may be a rule-based algorithm, a generative Al model, or other model, such as a conventional neural network configured to predict P3 pressure changes based on fuel flow rate into the secondary fuel manifold.

In embodiments with additional fuel manifolds, the fuel system will determine a ratio for each additional fuel manifold. For example, the fuel system will determine a ratio of the second fuel flow rate of the tertiary fuel manifold and the compressor discharge pressure.

The fuel system will adjust the fuel flow rate of the fuel to the secondary fuel manifold based on the determined ratio at step 310. Adjusting the fuel flow rate of the fuel to the secondary fuel manifold based on the ratio may include adjusting the fuel flow rate based on a ratio unit schedule. For example, the controller 152 may cause the flow divider valve 130 to divert more fuel toward the secondary fuel manifold 128B to increase the fuel flow rate during a rising rate of a ratio unit schedule. In an additional example, the controller 152 may cause the flow divider valve 130 to divert fuel away from the secondary fuel manifold 128B to accommodate a drop in P3 pressure during an engine surge.

In embodiments with additional fuel manifolds, the fuel system will adjust the fuel flow for each additional fuel manifold based on the determined ratio (step 308) of each additional manifold. For example, the fuel system will adjust the fuel flow rate of the fuel to the tertiary fuel manifold.

Although FIGURE 3 illustrates one example of a method 300 for ratio unit based filling of a fuel manifold of a gas turbine engine, various changes may be made to FIGURE 3. For example, while shown as a series of steps, various steps in FIGURE 3 may overlap, occur in parallel, or occur any number of times. Additionally, steps 304-310 may occur concurrently for a third, fourth, or more fuel manifolds.

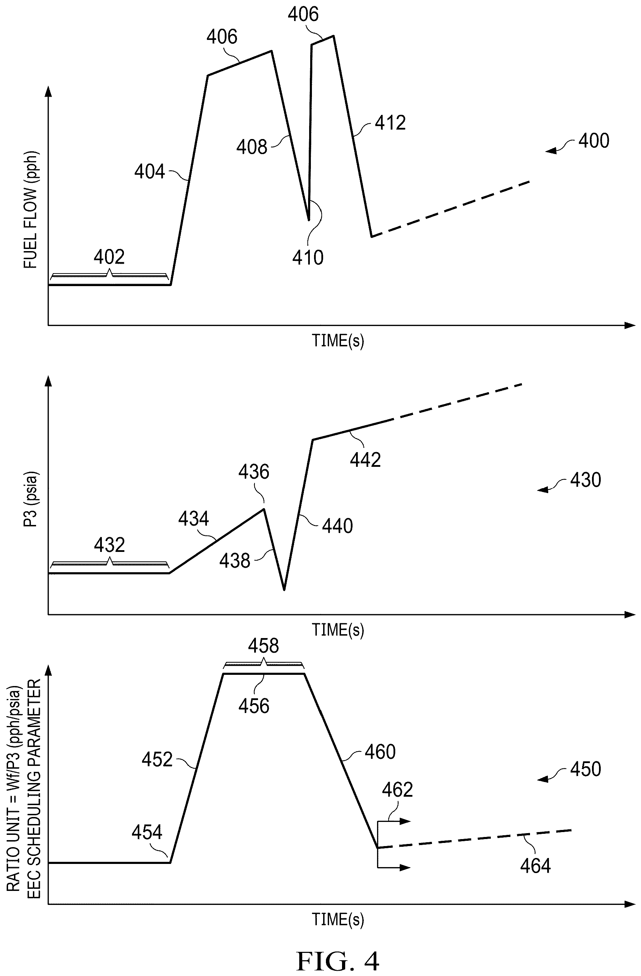

To maintain a ratio unit schedule, e.g., the ratio unit schedules 200, 250, the controller 152 may adjust fuel flow to the secondary fuel manifold 128B in response to changes in the P3 pressure. For example, the controller may adjust the fuel flow profile in response to a changing pressure profile during an engine surge, as shown in FIGURE 4.

FIGURE 4 illustrates fuel flow and pressure profiles 400, 430 to achieve a ratio unit schedule ratio unit schedule 450 in accordance with this disclosure. As shown in FIGURE 4, the fuel flow profile 400 is at a low flow steady state 402 and the pressure profile 430 is at a low pressure steady state 432 before the start of a rising rate 452 of the ratio unit schedule 450. Once the rising rate 452 begins, the fuel flow profile 400 moves from the low flow steady state 402 to an initial flow increase 404, indicative of increase fuel flow into the secondary fuel manifold 128B. As the initial flow increase 404 continues during a fill duration 458 of the ratio unit schedule 450, the pressure profile 430 undergoes an initial pressure increase 434. The initial pressure increase 434 continues as the fuel flow profile 400 reaches a second flow increase 406 at a filling sequence plateau 456. The second flow increase 406 is indicative of increased flow needed as pressure continues to build (as the initial pressure increase 434 rises) in the secondary fuel manifold 128B.

If the gas turbine engine system 100 experiences an engine surge 436, the pressure profile 430 may experience a surge pressure decrease 438. The surge pressure decrease 438 causes a surge flow decrease 408 in the fuel flow profile 400. This is because as the P3 pressure decreases, fuel flow rate must decrease proportionally to maintain the ratio unit schedule set by the controller 152. Thus, the surge pressure decrease 438 leads to the surge flow decrease 408, allowing the gas turbine engine system 100 to recover from the surge, resulting in a pressure increase 440 following surge recovery to return to a scheduled pressure increase 442 in the pressure profile 430 and a corresponding surge flow increase 410 to return to a scheduled flow decrease 412 in the fuel flow profile 400.

As pressure continues building and the ratio unit schedule 450 begins a falling rate 460, the fuel flow profile 400 proceeds to a scheduled flow decrease 412 to maintain the ratio unit schedule 450. The ratio unit schedule 450 may then continue to the falling rate 460 until it reaches a schedule end 462 before the controller resumes nominal engine control 464.

Although FIGURE 4 fuel flow and pressure profiles 400, 430 to achieve a ratio unit schedule 450 for a gas turbine engine system, various changes may be made to FIGURE 4. For example, various components in FIGURE 4 may be combined, further subdivided, replicated, omitted, or rearranged and additional components may be added according to particular needs.

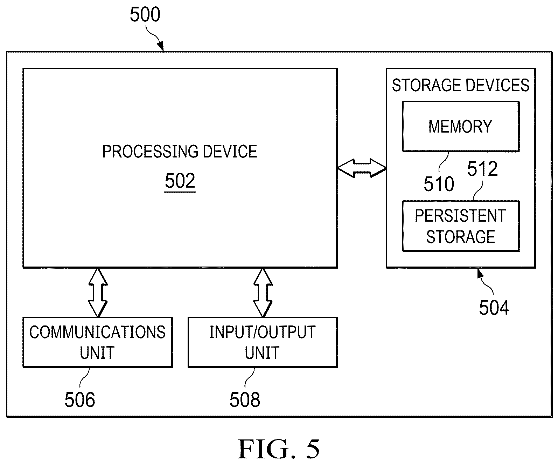

FIGURE 5 illustrates an example device 500 for ratio unit based filling of a fuel manifold of a gas turbine engine according to this disclosure. One or more instances of the device 500 (or portions thereof) may, for example, be used to at least partially implement the functionality of the gas turbine engine 100 of FIGURES 1A and 1B. However, the functionality of the gas turbine engine 100 may be implemented in any other suitable manner.

As shown in FIGURE 5, the device 500 denotes a computing device or system, such as the controller 152 of FIGURES 1A-1C, that includes at least one processor 502, at least one storage device 504, at least one communications unit 506, and at least one input/output (I/O) unit 508. The processor 502 may execute instructions that can be loaded into a memory 510. The processor 502 includes any suitable number(s) and type(s) of processors or other devices in any suitable arrangement. Example types of processors 502 include one or more microprocessors, microcontrollers, DSPs, ASICs, GPUs, FPGAs, or discrete circuitry.

The memory 510 and a persistent storage 512 are examples of storage devices 504, which represent any structure(s) capable of storing and facilitating retrieval of information (such as data, program code, and/or other suitable information on a temporary or permanent basis). The memory 510 may represent a random access memory or any other suitable volatile or non-volatile storage device(s). The persistent storage 512 may contain one or more components or devices supporting longer-term storage of data, such as a read only memory, hard drive, Flash memory, or optical disc.

The communications unit 506 supports communications with other systems or devices. For example, the communications unit 506 can include a network interface card or a wireless transceiver facilitating communications over a wired or wireless network. The communications unit 506 may support communications through any suitable physical or wireless communication link(s).

The I/O unit 508 allows for input and output of data. For example, the I/O unit 508 may provide a connection for user input through a keyboard, mouse, keypad, touchscreen, or other suitable input device. The I/O unit 508 may also send output to a display or other suitable output device. Note, however, that the I/O unit 508 may be omitted if the device 500 does not require local I/O, such as when the device 500 can be accessed remotely or operated autonomously.

In some embodiments, the instructions executed by the processor 502 can include instructions that implement all or portions of the functionality of the gas turbine engine 100 described above. For example, the instructions executed by the processor 502 can include instructions for ratio unit based filling of a fuel manifold of a gas turbine engine as described above.

Although FIGURE 5 illustrates one example of a device 500 for ratio unit based filling of a fuel manifold of a gas turbine engine, various changes may be made to FIGURE 5. For example, computing devices and systems come in a wide variety of configurations, and FIGURE 5 does not limit this disclosure to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method comprising:
flowing a fuel to a primary fuel manifold (128A) of a gas turbine engine (100);
flowing the fuel to a secondary fuel manifold (128B) of the gas turbine engine (100) at a fuel flow rate;
monitoring a compressor discharge pressure of the gas turbine engine (100);
determining a ratio of the fuel flow rate of the secondary fuel manifold (128B) and the compressor discharge pressure; and
adjusting the fuel flow rate of the fuel to the secondary fuel manifold (128B) based on the ratio.

2. The method of Claim 1, wherein adjusting the fuel flow rate of the fuel to the secondary fuel manifold (128B) based on the ratio comprises adjusting the fuel flow rate based on a ratio unit schedule (200; 250; 450).

3. The method of Claim 2, wherein the ratio unit schedule (200; 250; 450) comprises a rising rate (202; 252; 452), a filling sequence plateau (208; 258; 456), and a falling rate (212; 262; 460).

4. The method of Claim 3, wherein the rising rate (202; 252; 452) of the ratio unit schedule (200; 250; 450) begins at engine start.

5. The method of Claim 3, wherein the rising rate (202; 252; 452) of the ratio unit schedule (200; 250; 450) begins at a low power engine state.

6. The method of any preceding claim, wherein flowing fuel to the secondary fuel manifold (128B) of the gas turbine engine (100) at the fuel flow rate comprises:
flowing the fuel to a tertiary fuel manifold (128) of the gas turbine engine (100) at a second fuel flow rate based on a ratio of the second fuel flow rate of the tertiary fuel manifold (128) and the compressor discharge pressure.

7. The method of any preceding claim, wherein the ratio is synthesized from an on-board model.

8. A system (120) comprising:
a primary fuel manifold (128A);
a secondary fuel manifold (128B); and
a controller (152) comprising at least one processor (502) configured to cause the system to:
flow a fuel to a primary fuel manifold (128A);
flow the fuel to the secondary fuel manifold (128B) at a fuel flow rate;
monitor a compressor discharge pressure;
determine a ratio of the fuel flow rate of the secondary fuel manifold (128B) and the compressor discharge pressure; and
adjust the fuel flow rate of the fuel to the secondary fuel manifold (128B) based on the ratio.

9. An electronic device (500) configured to fill a fuel manifold of a gas turbine engine (100), the electronic device (500) comprising:
at least one sensor (144) configured to capture a compressor discharge pressure of the gas turbine engine (100); and
at least one processor (502) coupled to the at least one sensor (144), the at least one processor (502) is configured to:
flow a fuel to a primary fuel manifold (128A) of the gas turbine engine (100);
flow the fuel to a secondary fuel manifold (128B) of the gas turbine engine (100) at a fuel flow rate;
monitor the compressor discharge pressure;
determine a ratio of the fuel flow rate of the secondary fuel manifold (128B) and the compressor discharge pressure; and
adjust the fuel flow rate of the fuel to the secondary fuel manifold (128B) based on the ratio.

10. The system (120) of Claim 8 or the electronic device (500) of Claim 9, wherein, while adjusting the fuel flow rate of the fuel to the secondary fuel manifold (128B) based on the ratio, the at least one processor (502) is configured to adjust the flow rate based on a ratio unit schedule (200; 250; 450).

11. The system (120) or electronic device (500) of Claim 10, wherein the ratio unit schedule (200; 250; 450) comprises a rising rate (202; 252; 452), a filling sequence plateau (208; 258; 456), and a falling rate (212; 262; 460).

12. The system (120) or electronic device (500) of Claim 11, wherein the rising rate (202; 252; 452) of the ratio unit schedule (200; 250; 450) begins at engine start.

13. The system (120) or electronic device (500) of Claim 11, wherein the rising rate (202; 252; 452) of the ratio unit schedule (200; 250; 450) begins at a low power engine state.

14. The system (120) or electronic device (500) of any of Claims 8 to 13, wherein the ratio is synthesized using the processor (502) using an on-board model.
